# EUROPEAN PATENT SPECIFICATION

(11) **EP 4 060 774 B1**
(45) Date of publication and mention of the grant of the patent: **06.03.2024**
(21) Application number: 22153439.9
(22) Date of filing: 26.01.2022
(51) Int. Cl.: H01M 8/04089, H01M 8/04664, H01M 8/04791, H01M 8/0612

(54) **FUEL CELL SYSTEM**
BRENNSTOFFZELLENSYSTEM
SYSTÈME DE PILES À COMBUSTIBLE

(30) Priority: 19.03.2021 JP 2021046289
(43) Date of publication of application: 21.09.2022
(73) Proprietor: Hitachi, Ltd., Tokyo 100-8280 (JP)
(72) Inventor: NISHIDE, Akinori, Tokyo, 100-8280 (JP); SHIRAKAWA, Yuzo, Tokyo, 100-8280 (JP); HASEGAWA, Hiroaki, Tokyo, 100-8280 (JP); FURUTA, Futoshi, Tokyo, 100-8280 (JP); MORIMOTO, Yoshitaka, Tokyo, 100-8280 (JP); WATANABE, Keiji, Tokyo, 100-8280 (JP); TAKAMATSU, Daikoh, Tokyo, 100-8280 (JP); ISHIKAWA, Takao, Tokyo, 100-8280 (JP)
(74) Representative: Strehl Schübel-Hopf & Partner

(56) References cited:
- CN-A- 108 658 361
- JP-A- 2008 153 149
- JP-A- 2018 087 501
- KR-A- 20140 034 623

## Description

### BACKGROUND OF THE INVENTION

### 1. Field of the Invention

The present invention relates to a fuel cell system.

### 2. Description of the Related Art

With the increase in environmental consciousness in recent years, there is an increasing need for technologies that generate power with a small carbon emission amount. Micro grids are attracting attention as a technology that enables local production and local consumption of energy by distributedly arranging relatively small-sized power supply facilities. One of candidates for the power supply facilities included in the micro grids is fuel cells.

As an example of fuels for fuel cells, there is biofuel. Biofuel is a fuel derived from bioresources such as plants, and can be supplied as a fuel gas to a fuel cell in the form of methane, ethanol, or the like. Organic waste that is disposed in food value chains can be reused as a biofuel. This is useful because energy companies can use inexpensive biofuels, and food companies can sell biofuels derived from organic waste, and purchase inexpensive power.

JP-2006-140103-A described below discloses a technology that has been developed for an object of "obtaining a method of performing running control such that a fuel cell is safe and stable, and the fuel utilization rate is appropriate or maximized certainly in a case where the composition of a raw fuel supplied to the fuel cell is known, and even in a case where the composition is unknown or where the composition is unknown and even varies, and a system for the method," and the technology is "a running control method for a fuel cell that uses a fuel which is obtained by modifying a raw fuel, the running control method including: measuring an oxygen partial pressure in the fuel to be introduced into an anode of the fuel cell by using an oxygen sensor arranged at a section for introducing the fuel to the anode; and predicting the fuel composition from the oxygen partial pressure value, and controlling the flow rate of the raw fuel such that the fuel utilization rate becomes appropriate or optimum, and a system for the method" (see the abstract).

Other than biofuels, examples of fuel gases to be supplied to fuel cells include a supply gas supplied by a gas supply company (example: a town gas company), a recycle gas (example: a carbon dioxide gas) separated from an emission gas output by a fuel cell, and the like. By supplying a fuel cell with a mixed gas which is a mixture of two or more of them, various running forms can be constructed in terms of carbon dioxide gas reduction, power generation efficiency, and the like.

Since biofuels typically have unstable gas composition, there is a possibility that if a biofuel is supplied as a fuel gas of a fuel cell, the running state (e.g. the fuel utilization rate) of the fuel cell becomes unstable. The technology described in JP-2006-140103-A describes a technology of stably running a fuel cell even in a case where the composition of a raw fuel (including a biofuel) is unknown or varies. However, it is not clear in the document how the running control of a fuel cell should be performed in a case where the mixed gas mentioned above which is a mixture of a recycle gas or a supply gas in addition to a biofuel gas is used as a fuel gas.

The present invention has been developed in view of a problem like the one described above, and an object of the present invention is to provide a technology that makes it possible to effectively run a fuel cell that uses, as fuel gases, a recycle gas and a supply gas in addition to a biofuel gas.

### SUMMARY OF THE INVENTION

A fuel cell system according to the present invention measures first gas composition of a supply gas and a biofuel gas, also measures second gas composition of a recycle gas, calculates a gas mixing ratio of a fuel gas on the basis of the first gas composition and the second gas composition, and calculates, on the basis of the calculated gas mixing ratio, a fuel utilization rate required for a fuel cell.

According to the fuel cell system according to the present invention, it is possible to effectively run a fuel cell that uses, as fuel gases, a recycle gas and a supply gas in addition to a biofuel gas.

### BRIEF DESCRIPTION OF THE DRAWINGS

FIG. 1 is a schematic configuration diagram of a fuel cell system 1, and peripheral facilities thereof according to a first embodiment;
FIG. 2 is a figure for explaining an information flow around the fuel cell system 1;
FIG. 3 is a detailed configuration diagram of the fuel cell system 1;
FIG. 4A is a figure for explaining input and output and processing contents of each functional section of the fuel cell system 1;
FIG. 4B is a figure for explaining input and output and processing contents of each functional section of the fuel cell system 1;
FIG. 5A is a figure for explaining a procedure of control performed when the composition of a fuel gas has varied over time;
FIG. 5B is a figure for explaining a procedure of control performed when power demand has varied over time;
FIG. 6 is another example of a user interface provided by the fuel cell system 1;
FIG. 7 depicts results of computation of a relation between a composition ratio and temperature of a fuel gas;
FIG. 8 depicts results of computation of relations between power generation efficiency and temperature that are observed when a fuel gas with a certain composition ratio is used, the relations being computed for different fuel utilization rates;
FIG. 9 depicts results of computation of a relation between fuel gas composition and power generation efficiency in a reformer 13; and
FIG. 10 depicts results of computation of power generation efficiency (left axis), and carbon dioxide emission amount per power (right axis), the power generation efficiency and the carbon dioxide emission amounts being computed for different ratios of carbon dioxide fed to a fuel gas.

### DESCRIPTION OF THE PREFERRED EMBODIMENTS

### <First Embodiment>

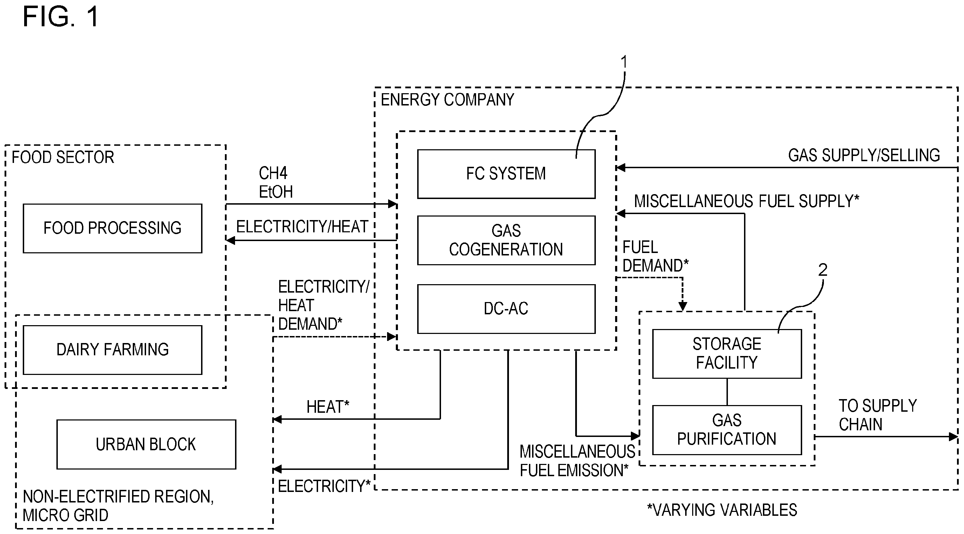

FIG. 1 is a schematic configuration diagram of a fuel cell system 1 and peripheral facilities thereof according to a first embodiment of the present invention. It is supposed that an energy company runs the fuel cell system 1 in the form explained in the present embodiment. It is supposed that the fuel cell system 1 is used as a micro grid power supply facility.

The fuel cell system 1 generates power and heat by using fuel gases, and provides consumers (a food processing company and an urban block in FIG. 1) with the power and heat. As the fuel gases, (a) a biofuel gas (example: at least either methane or ethanol) provided by the food processing companies, (b) a supply gas provided by a town gas company, (c) a recycle gas from an emission gas mentioned below, and the like can be used.

The emission gas that is generated in the power generation process in the fuel cell system 1 can be used as a miscellaneous fuel gas after the recycle gas mentioned below is removed. The miscellaneous fuel gas is a gas that can be used as a fuel by a fuel cell, and is a carbon monoxide gas, a hydrogen gas, water vapor, or the like. The miscellaneous fuel gas can be stored in a storage facility 2, and provided again to the fuel cell system 1 according to fuel demand.

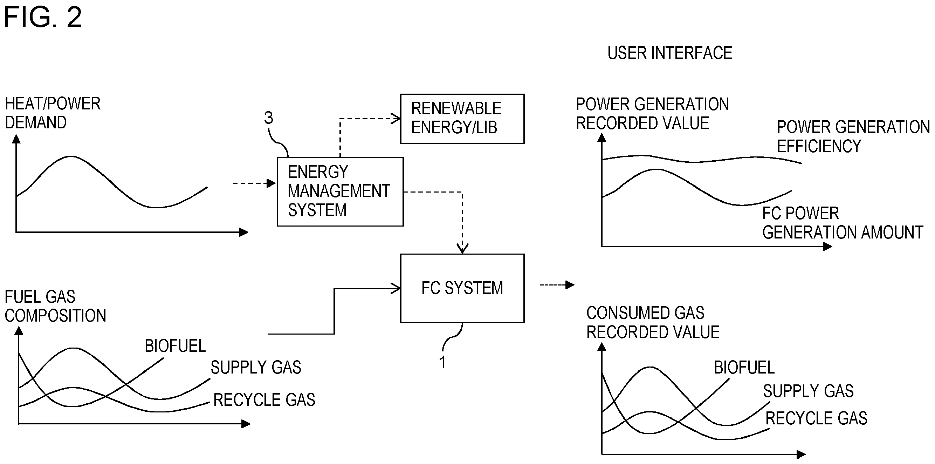

FIG. 2 is a figure for explaining an information flow around the fuel cell system 1. An energy management system 3 is a system that is run by an energy company, for example, and is a system that controls the fuel cell system 1 and other power supply facilities (e.g. solar cells and secondary cells included as part of a micro grid). The energy management system 3 monitors temporal variations of heat/power demand within an area managed by the energy management system 3, and timely notifies the fuel cell system 1 of the temporal variations.

The fuel cell system 1 generates power by being provided with fuel gases. In the fuel gases, the supply amount of a biofuel gas particularly varies over time significantly, and accordingly the fuel gas composition varies over time significantly. One of the objects of the present invention is to run the fuel cell system 1 effectively when a mixed gas of such an unstable biofuel gas, a supply gas, and a recycle gas is used as a fuel gas.

The fuel cell system 1 outputs a power generation amount (temporal changes in generated power) and temporal changes in power generation efficiency. The fuel cell system 1 further outputs a consumption record of each component included in the composition of a fuel gas. The fuel cell system 1 can present these values on a user interface. The user interface can include a screen interface that displays temporal variations of these values in a graph, for example. Another proper user interface may be used also.

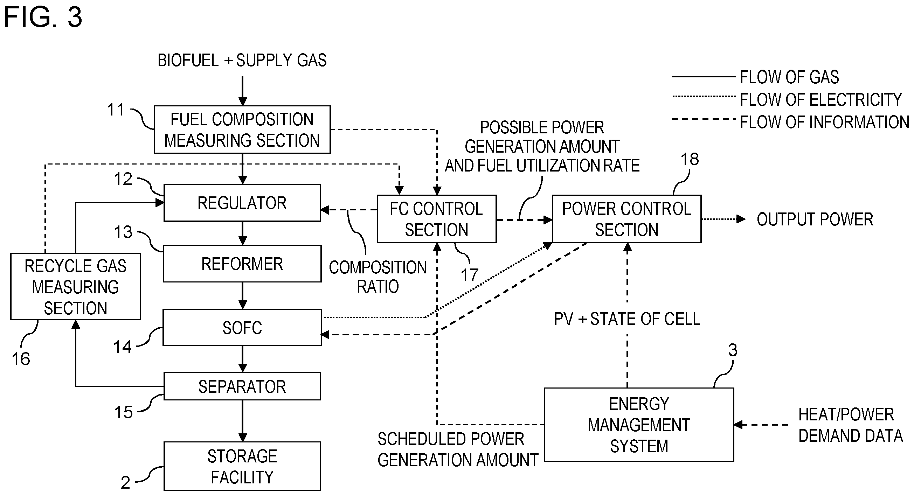

FIG. 3 is a detailed configuration diagram of the fuel cell system 1. The fuel cell system 1 includes a fuel composition measuring section 11, a regulator 12, a reformer 13, a fuel cell 14, a separator 15, a recycle gas measuring section 16, a fuel cell control section 17, and a power control section 18.

The fuel composition measuring section 11 measures the gas composition of a biofuel gas and a supply gas that are supplied as fuel gases. The regulator 12 adjusts the mixing ratio (the mixing ratio of the biofuel gas, the supply gas, and a recycle gas) of a fuel gas to be supplied to the fuel cell 14. The reformer 13 converts the mixed gas into a gas such as a hydrogen gas to be used by the fuel cell 14 for power generation. The fuel cell 14 includes a power generation cell that generates power by using the supplied gas. The separator 15 separates a recycle gas (e.g. a carbon dioxide gas) that can be reused as a fuel gas from an emission gas output by the fuel cell 14, and stores residual components in the storage facility 2 as a miscellaneous fuel gas. The recycle gas measuring section 16 measures the composition of the recycle gas output by the separator 15. The fuel cell control section 17 gives an instruction about the gas mixing ratio to the regulator 12. The power control section 18 controls current and voltage output by the fuel cell 14. Detailed operation of these control sections is mentioned below.

The fuel cell control section 17 can be configured by using hardware such as a circuit device on which its functionalities are implemented, and can be configured by using software that implements its functionalities being executed by an arithmetic operation apparatus. The power control section 18 can be configured by using a device such as a power conditioner that controls current/voltage/power output by the fuel cell 14. The power control section 18 controls output of the fuel cell 14 by ON/OFF control of a switching element, for example. In a case where the fuel cell 14 itself has an output adjustment functionality, the power control section 18 can be configured as a device that gives an instruction about an output value to the output adjustment functionality. The power control section 18 supplies a consumer network with output (current/voltage/power) from the fuel cell 14.

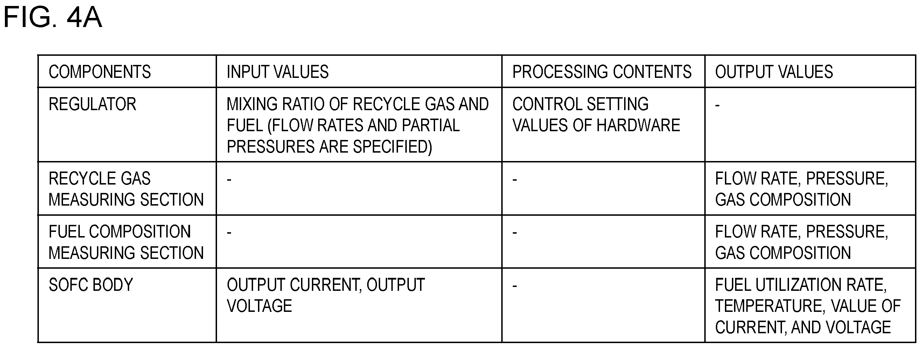

FIG. 4A to FIG. 4B are figures for explaining input and output and processing contents of each functional section of the fuel cell system 1. With reference to these figures, detailed operation of each functional section is explained below.

The regulator 12 receives a command for giving an instruction about a gas mixing ratio of a mixed gas from the fuel cell control section 17. According to the command, the regulator 12 adjusts the gas mixing ratio of the mixed gas to be supplied to the fuel cell 14 by adjusting the flow rate and pressure of each gas.

The recycle gas measuring section 16 measures the gas composition of a recycle gas, the flow rate of the recycle gas, and the pressure of the recycle gas, and reports measurement results to the fuel cell control section 17 regularly. The fuel composition measuring section 11 measures the gas composition of a biofuel gas and a supply gas, the flow rates of these gases, and the pressures of these gases, and reports measurement results to the fuel cell control section 17 regularly.

The fuel cell 14 receives command values about an output current and an output voltage from the power control section 18, and generates power according to the command values to thereby output an output current and an output voltage according to the instruction. Alternatively, the power control section 18 controls an output current and an output voltage to be taken out from the fuel cell 14 to thereby control output from the fuel cell 14. The fuel cell 14 regularly reports, to the fuel cell control section 17, the fuel utilization rate, the cell temperature, the output current, and the output voltage.

The energy management system 3 monitors temporal variations of energy demand in a management area. The energy management system 3 notifies the fuel cell control section 17 of a scheduled power generation amount (an instruction value of the power generation amount of the fuel cell 14). The energy management system 3 notifies the power control section 18 of the power generation status of power supply facilities other than the fuel cell system 1 (in other words, an allocated amount of power that the fuel cell system 1 should generate).

The fuel cell control section 17 receives the notification of the scheduled power generation amount from the energy management system 3. The fuel cell control section 17 receives the gas composition of the recycle gas from the recycle gas measuring section 16, and receives the gas composition of the fuel gas from the fuel composition measuring section 11. The fuel cell control section 17 receives the current state (the state such as the output current, the output voltage, or the fuel utilization rate) from the fuel cell 14.

The fuel cell control section 17 compares the scheduled power generation amount with the current state to thereby determine whether or not the fuel cell 14 can generate the power of the scheduled power generation amount, and notifies the energy management system 3 of results of the determination. In a case where the fuel cell 14 can generate the amount of power, the fuel cell control section 17 outputs the following information: (a) an instruction to the regulator 12 about a gas mixing ratio (the flow rate and pressure of each gas) that can realize the scheduled power generation amount; and (b) an instruction to the power control section 18 to take out an output current and an output voltage corresponding to the scheduled power generation amount from the fuel cell 14. In a case where the power generation capacity of the fuel cell 14 is not sufficient for the scheduled power generation amount, the fuel cell control section 17 instructs the power control section 18 to take out, from the fuel cell 14, an amount of power which is equal to or smaller than a possible power generation amount.

If the fuel cell 14 continues power generation for a long time in a state in which its fuel utilization rate is equal to or higher than an upper limit value, the possibility of damage increases. The upper limit value (or a threshold range of values above and below the upper limit value) can be considered as the upper limit of the power generation capacity of the fuel cell 14. According to the upper limit, the fuel cell control section 17 can determine whether or not the power of the scheduled power generation amount can be generated.

If the gas mixing ratio varies suddenly, there is a possibility that the fuel cell 14 is damaged. In view of this, the fuel cell control section 17 may give the regulator 12 an instruction about an adjustment speed (changing speeds of the flow rate and pressure of each gas) of the gas mixing ratio. For example, an adjustment speed at which damages to be given to the fuel cell 14 become smaller than a threshold is grasped in advance, and an instruction is given to the regulator 12 about an adjustment speed lower than the adjustment speed.

On the basis of the power generation status of the power supply facilities other than the fuel cell system 1, the power control section 18 controls a power generation amount (the output current and output voltage of the fuel cell 14) taken out from the fuel cell system 1. The power control section 18 regularly reports, to the fuel cell control section 17, the current output (the current, voltage, and power) of the fuel cell 14.

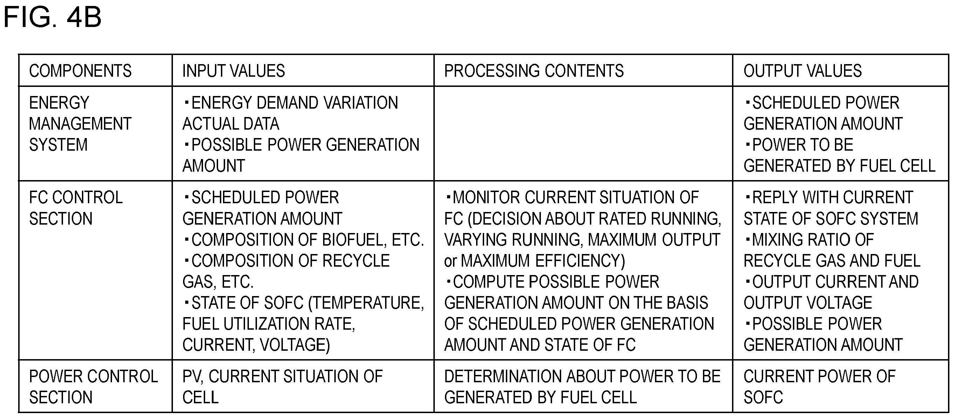

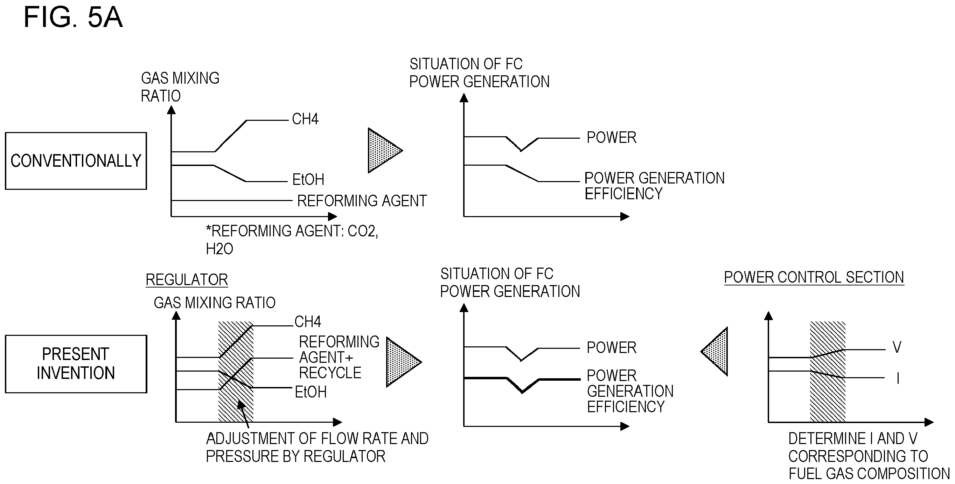

FIG. 5A is a figure for explaining a procedure of control performed when the composition of a fuel gas has varied over time. The composition of a biofuel gas particularly in fuel gases used by the fuel cell 14 is not stable, and typically varies over time significantly. In view of this, in addition to the control procedure explained with reference to FIG. 4, the fuel cell control section 17 implements the following control when the fuel gas composition has varied.

When the composition of a biofuel gas has varied in conventional fuel cell systems, only the output current of a fuel cell is controlled to thereby control the power generation amount of the fuel cell. Suppressing the output current is equivalent to outputting an amount of generated power which is smaller than an actual power generation capacity. Accordingly, because of this, the power generation efficiency of the fuel cell declines in some cases.

In the present embodiment, when fuel gas composition measured by the fuel composition measuring section 11 has varied, the fuel cell control section 17 computes such fuel gas composition, an output current, and an output voltage that can suppress variations of the generated power and power generation efficiency of the fuel cell 14. The fuel cell control section 17 gives the regulator 12 an instruction about the computed fuel gas composition, and also give the power control section 18 an instruction about the computed output current and output voltage. The power control section 18 takes out the output current and output voltage from the fuel cell 14. Thereby, the fuel cell 14 operates to suppress variations of the generated power and power generation efficiency, and the composition of a fuel gas supplied to the fuel cell 14 is adjusted in advance such that the suppression can be realized. Accordingly, the fuel cell 14 can suppress variations of the generated power and power generation efficiency.

With reference to FIG. 5A, differences between a conventional control technique and the control technique according to the present invention are examined. Conventionally, when the fuel gas composition has varied, while the variations are accepted as is, control is performed on the output side (i.e. control of an output current taken out from a fuel cell) to thereby perform control to follow the variations. In contrast to this, in the present invention, in a case where the fuel gas composition has varied, the regulator 12 is controlled to thereby dynamically adjust the composition of a fuel gas to be supplied to the fuel cell 14. Since the power generation efficiency is influenced by the fuel utilization rate, by giving a fuel gas with composition that can maintain a desired power generation amount, the fuel utilization rate can be maintained (i.e. the power generation efficiency can be maintained).

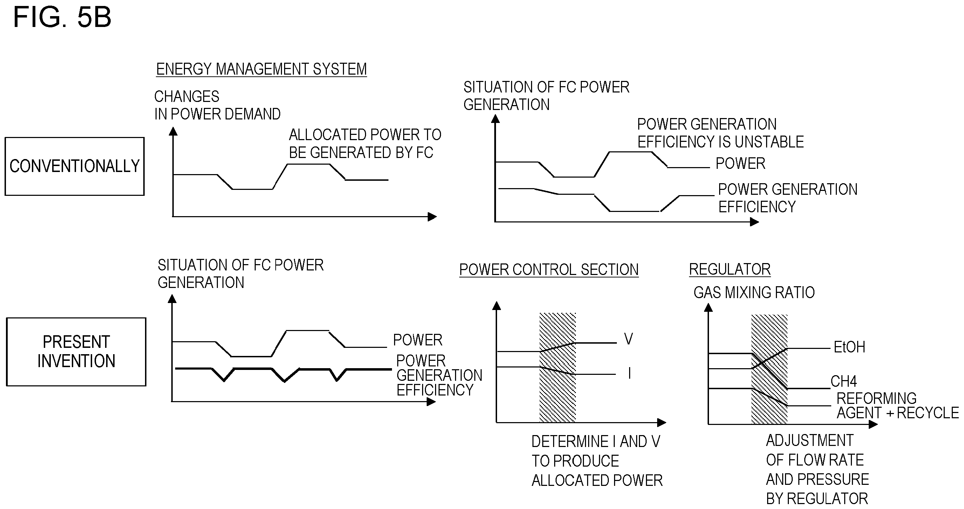

FIG. 5B is a figure for explaining a procedure of control performed when power demand has varied over time. Since power demand varies over time, an amount of power that the fuel cell system 1 is demanded to generate also varies over time. In view of this, in addition to the control procedure explained with reference to FIG. 4, the fuel cell control section 17 implements the following control when the power demand has varied.

In a conventional fuel cell system, when power demand has varied, normally, the fuel utilization rate is controlled to thereby adjust the output. For example, when the power demand has declined, the fuel utilization rate is intentionally lowered to thereby lower the output of a fuel cell. This causes a problem that the power generation efficiency of the fuel cell declines.

In the present embodiment, when power demand has varied, the fuel cell control section 17 first computes such fuel gas composition, an output current, and an output voltage that the generated power of the fuel cell 14 becomes a target power (a scheduled power generation amount received from the energy management system 3 according to the varied demand). At this time, by using an object function that minimizes variations of the power generation efficiency, such a combination of fuel gas composition, an output current, and an output voltage that can achieve the target power is searched for. The fuel cell control section 17 gives the regulator 12 an instruction about the computed fuel gas composition, and also give the power control section 18 an instruction about the computed output current and output voltage. The power control section 18 takes out the output current and output voltage from the fuel cell 14. Thereby, the fuel cell 14 operates so as to suppress variations of the power generation efficiency while satisfying the power demand, and the composition of a fuel gas supplied to the fuel cell 14 is adjusted in advance such that the suppression can be realized. Accordingly, the fuel cell 14 can suppress variations of the power generation efficiency.

With reference to FIG. 5B, differences between a conventional control technique and the control technique according to the present invention are examined. Conventionally, when power demand has varied, the fuel utilization rate is adjusted to thereby follow the demand. Since not maintaining the fuel utilization rate leads to the power generation efficiency also not being maintained, conventionally it has been difficult to suppress variations of the power generation efficiency. In contrast to this, in the present invention, in a case where power demand has varied, an instruction is given to the regulator 12 about such fuel gas composition that can maintain the power generation efficiency while following the power demand. Thereby, it becomes possible to both follow the power demand and maintain the power generation efficiency.

### <First Embodiment: Summary>

The fuel cell system 1 according to the present first embodiment measures a first composition ratio of a mixed gas of a supply gas and a biofuel gas, also measures a second composition ratio of a recycle gas, and, on the basis of these composition ratios, computes a gas mixing ratio of a fuel gas that should be supplied to the fuel cell 14. Thereby, even in a case where the supply amount of the biofuel gas in the mixture fuel gas of the supply gas, the biofuel gas, and the recycle gas is unstable, the power generation amount of the fuel cell 14 can be controlled appropriately.

When the composition ratio of a fuel gas has varied, the fuel cell system 1 according to the present first embodiment calculates such a gas mixing ratio that can suppress variations of the output power and power generation efficiency, and supplies the fuel gas to the fuel cell 14 according to the gas mixing ratio. Thereby, even in a case where the composition ratio of the fuel gas has varied, the output power can be maintained without sacrificing the power generation efficiency.

When power demand has varied, the fuel cell system 1 according to the present first embodiment calculates such a gas mixing ratio that the power demand can be followed and also variations of the power generation efficiency can be suppressed, and supplies the fuel gas to the fuel cell 14 according to the gas mixing ratio. Thereby, even in a case where the power demand has varied, the output power can be maintained without sacrificing the power generation efficiency.

Because of the configuration described above of the fuel cell system 1 according to the present first embodiment, (a) the energy company can contribute to the low carbon power generation by using inexpensive biofuels, and also maintaining the power selling price; (b) the food sector can obtain profits by selling the biofuels; and (c) a user (example: a municipality) of a micro grid can obtain ethical merit because of the use of low carbon energy.

### <Second Embodiment>

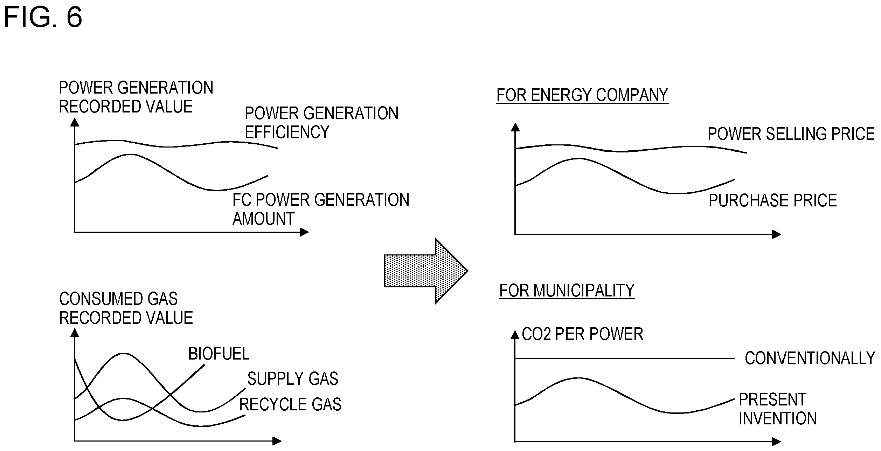

FIG. 6 is another example of a user interface provided by the fuel cell system 1. For convenience of explanation, two user interface examples explained with reference to FIG. 2 are depicted together. The fuel cell system 1 may further provide a user interface explained below. In other respects, the configuration of the fuel cell system 1 is similar to that in the first embodiment.

It is supposed that an energy company (example: a power generation company) is running the fuel cell system 1. Since the energy company wishes to purchase a fuel gas at the lowest possible price, the fuel cell system 1 displays the purchase price of each gas including the past history on the user interface. The energy company can purchase the fuel gas at an optimum purchase price while comparing power generation records and gas consumption records with the purchase price.

The correspondence between the power generation records and gas consumption records, and the purchase price can be predicted to some extent from the past history. For example, a learner such as a neural network is caused to learn temporal variations of these in advance, and how the purchase price of each gas varies when the composition ratio (or power demand) of a fuel gas is varied can be obtained as the output of the learner. According to results of the prediction, the energy company can run the fuel cell system 1 while predicting the fuel composition and the purchase price.

The amount of CO2 emitted by the fuel cell 14 varies depending on the composition ratio of the fuel gas. Furthermore, the amount of CO2 emitted by the fuel cell system 1 varies also depending on the amount of CO2 recycled by the separator 15. These emission amounts can be computed by grasping in advance a relation between the composition ratio and the emission amount, and a relation between the recycle amount and the emission amount. In view of this, the CO2 emission amount per power generated by the fuel cell system 1 is computed, and results of the computation are presented on the user interface. For example, by presenting the user interface to a user (example: a municipality) of a micro grid, the user can really feel that the user is contributing to CO2 reduction.

### <Third Embodiment>

In a third embodiment of the present invention, results of computation of specific parameters performed when the fuel cell system 1 is run are explained. Since the configuration of the fuel cell system 1 is similar to that in the first to second embodiments, parameter examples are mainly explained below.

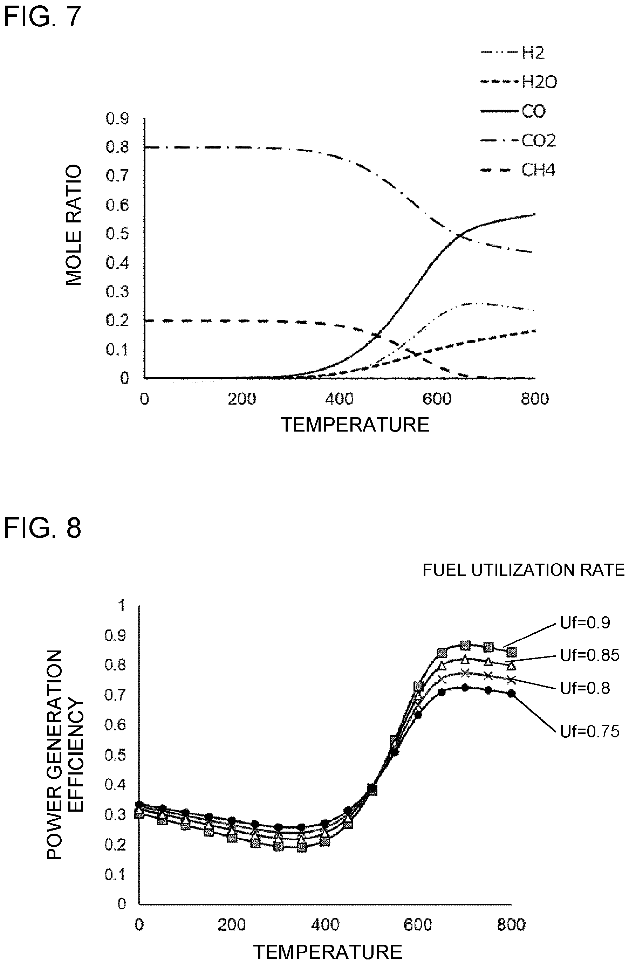

FIG. 7 depicts results of computation of a relation between a composition ratio and temperature of a fuel gas. At the time of low temperature, methane and hydrogen gas are generally mixed at the ratio of 1:4. It can be known that when the temperature of a fuel gas reaches 700°C approximately, there is almost no methane anymore, and the ratios of carbon monoxide, carbon dioxide, and hydrogen increase.

FIG. 8 depicts results of computation of relations between power generation efficiency and temperature that are observed when a fuel gas with a certain composition ratio is used, the relations being computed for different fuel utilization rates. It can be known that about all of the fuel utilization rates, the power generation efficiency becomes the highest near 700°C.

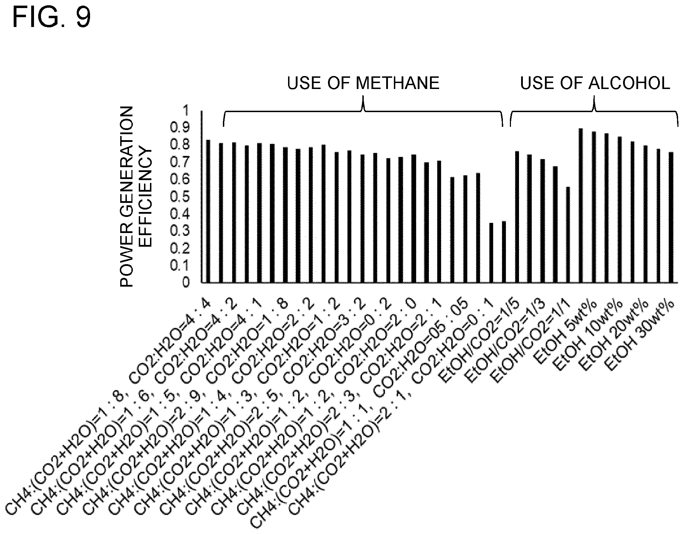

FIG. 9 depicts results of computation of a relation between fuel gas composition and power generation efficiency in the reformer 13. Data describing computation results in FIG. 9 is retained in the fuel cell control section 17 in advance, and the fuel composition corresponding to desired power generation efficiency can be obtained according to the data. For example, the fuel gas composition required for obtaining desired power generation efficiency in FIG. 5A or FIG. 5B can be obtained according to the data.

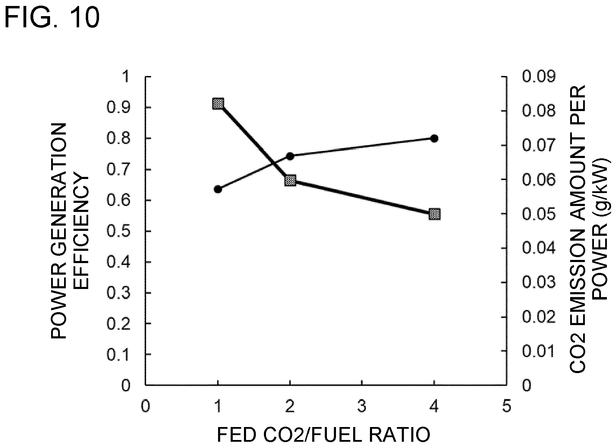

FIG. 10 depicts results of computation of power generation efficiency (left axis) and carbon dioxide emission amount per power (right axis), the power generation efficiency and the carbon dioxide emission amounts being computed for different ratios of carbon dioxide fed to a fuel gas. It can be known that when the ratio of CO2 fed into a fuel increases (left axis), the emission of CO2 decreases (right axis) because CO2 is reused by the fuel cell system 1, and the power generation efficiency of the fuel cell 14 increases.

### <Fourth Embodiment>

In the embodiments above, for example, the mixed gas can include a gas in which ethanol water occupying 3 to 40 weight percent of the mixed gas is mixed, in addition to a methane gas and a hydrogen gas. For example, a recycle gas can include a gas in which the ratio between (volume ratio) a mixed gas of a carbon dioxide gas and water vapor and a mixed gas of a carbon monoxide gas and a hydrogen gas varies within the range of 9:1 to 0:10. More desirably, the recycle gas can include a gas whose ratio described above varies within the range of 8:2 to 3:7. This ratio is a ratio according to the range of a fuel utilization rate mentioned below.

In the embodiments above, according to results of experiments conducted by the inventors, regarding a mixed gas and a recycle gas, it is desirable to attain such a gas mixing ratio that the following relations hold true simultaneously: (a) the ratio y/x of the molar flow rate y of a hydrogen gas to the molar flow rate x of ethanol water is equal to or higher than 3, and (b) the ratio b/a of the molar flow rate b of water vapor to the molar flow rate a of a methane gas is equal to or higher than 1. Furthermore, it is desirable if either y/x ≤ 8 or b/a ≤ 6.5 holds true.

In the embodiments above, the fuel utilization rate is desirably 0.0 to 0.9, and the density of current to flow through a fuel cell, and the voltage output by the fuel cell are specified according to the fuel utilization rate. For example, the density of current flowing through the fuel cell is 0.0 A/cm² to 0.55 A/cm2, and the voltage output by one fuel cell is 1.1 V to 0.8 V. In this case, the lowest value of the fuel utilization rate is a value that is determined on the premise that gas cogeneration and the fuel cell are used in combination, and the largest value of the fuel utilization rate is a value that is determined not to exceed the limit value of SOFC cells (approximately 0.6 A/cm²).

More desirably, the fuel utilization rate is 0.3 to 0.8, the density of current flowing through the fuel cell is 0.15 A/cm² to 0.55 A/cm², and the voltage output by one fuel cell is 1.0 V to 0.85 V. In this case, the lowest value of the fuel utilization rate is a value that is calculated from the heat generation amount required for maintaining the heat balance by the SOFC singly, and the largest value of the fuel utilization rate is a value that is obtained through experiments as the largest value that does not cause concentration polarization in the IV curve.

Whereas an example of the user interface is explained in the second embodiment, the user interface needs not necessarily be provided on a screen. For example, by outputting data describing contents that are equivalent to contents presented by the user interface explained in the second embodiment, equivalent information can be presented to a user, and thus such a mode of output can be used as the user interface. Other modes of output may also be used.

## Claims

1. A fuel cell system (1) comprising:
a fuel composition measuring section (11) that measures first gas composition of a mixed gas in which a supply gas supplied from a gas supplier and a biofuel gas are mixed;
**characterised by**:
a recycle gas measuring section (16) that measures second gas composition of a recycle gas output by a separator (15) that separates the recycle gas from an emission gas emitted by a fuel cell (14) that generates power by using the mixed gas; and
a fuel cell control section (17) that calculates, on a basis of the first gas composition and the second gas composition, a gas mixing ratio at which a regulator (12) mixes the supply gas and the biofuel gas, and calculates, on a basis of the calculated gas mixing ratio, a fuel utilization rate required for the fuel cell (14).

2. The fuel cell system (1) according to claim 1, further comprising a power control section (18) that controls, on a basis of the fuel utilization rate, a value of current output by the fuel cell (14) and a value of voltage output by the fuel cell (14).

3. The fuel cell system (1) according to claim 1, further comprising a power control section (18) that controls a value of current output by the fuel cell (14) and a value of voltage output by the fuel cell (14), wherein
the fuel cell control section (17) controls the power control section (18) such that the value of current and the value of voltage output from the fuel cell (14) make output power of the fuel cell (14) close to a target power.

4. The fuel cell system (1) according to claim 1, further comprising a power control section (18) that controls a value of current output by the fuel cell (14) and a value of voltage output by the fuel cell (14), wherein
the fuel cell control section (17) controls the power control section (18) such that the value of current and the value of voltage output from the fuel cell (14) make output power of the fuel cell (14) close to the target power.

5. The fuel cell system (1) according to claim 1, wherein
the fuel cell control section (17) is configured to give the regulator (12) an instruction about an adjustment speed at which the regulator (12) adjusts the gas mixing ratio, and
the fuel cell control section (17) gives the regulator (12) an instruction about such an adjustment speed that a damage caused to the fuel cell (14) becomes smaller than a threshold.

6. The fuel cell system (1) according to claim 1, wherein the separator (15) stores, in a storage facility (2), a miscellaneous fuel gas that is left after the recycle gas is separated from the emission gas.

7. The fuel cell system (1) according to claim 1, wherein
the biofuel gas includes at least either methane or ethanol,
the recycle gas is a carbon dioxide gas, and
the fuel cell (14) receives, as at least part of the supply gas, a gas supplied by a gas supply company.

8. The fuel cell system (1) according to claim 1, further comprising an interface that presents at least any of:
an amount of power generated by the fuel cell (14);
power generation efficiency of the fuel cell (14); and
amounts of the supply gas, the biofuel gas, and the recycle gas that are consumed by the fuel cell (14).

9. The fuel cell system (1) according to claim 1, further comprising an interface that presents at least any of:
a purchase price of a fuel gas that the fuel cell (14) uses for power generation;
a predicted value of the purchase price that varies depending on output power of the fuel cell (14); and
an emission amount of a carbon dioxide gas that varies depending on power generation of the fuel cell (14).

10. The fuel cell system (1) according to claim 1, wherein
the mixed gas is a gas in which ethanol-water occupying 3 to 40 weight percent of the mixed gas is mixed, in addition to a methane gas and a hydrogen gas, and
the recycle gas is a gas in which a ratio between a mixed gas of a carbon dioxide gas and water vapor and a mixed gas of a carbon monoxide gas and a hydrogen gas varies within a range of 9:1 to 0:10.

11. The fuel cell system (1) according to claim 10, wherein
the mixed gas and the recycle gas have such gas mixing ratios that:
a ratio y/x which is a ratio of a molar flow rate y of the hydrogen gas to a molar flow rate x of the ethanol-water is equal to or larger than 3; and
a ratio b/a which is a ratio of a molar flow rate b of the water vapor to a molar flow rate a of the methane gas is equal to or larger than 1,
hold true simultaneously, and
either y/x ≤ 8 or b/a ≤ 6.5 holds true.

12. The fuel cell system (1) according to claim 1, wherein
the fuel utilization rate is 0.0 to 0.9,
density of current flowing through the fuel cell (14) is 0.0 A/cm² to 0.55 A/cm², and
voltage output by one fuel cell (14) is 1.1 V to 0.8 V.

## Patentansprüche

1. Brennstoffzellensystem (1), das Folgendes umfasst:
einen Brennstoffzusammensetzungs-Messabschnitt (11), der eine erste Gaszusammensetzung eines Mischgases misst, in dem ein von einem Gaslieferanten geliefertes Versorgungsgas und ein Biobrennstoffgas gemischt sind;
**gekennzeichnet durch**:
einen Rückführgas-Messabschnitt (16), der eine zweite Gaszusammensetzung eines Rückführgases misst, das von einem Separator (15) ausgegeben wird, der das Rückführgas von einem Emissionsgas trennt, das von einer Brennstoffzelle (14) ausgegeben wird, die unter Verwendung des Mischgases Strom erzeugt; und
einen Brennstoffzellen-Steuerabschnitt (17), der auf der Grundlage der ersten Gaszusammensetzung und der zweiten Gaszusammensetzung ein Gasmischungsverhältnis berechnet, bei dem ein Regler (12) das Versorgungsgas und das Biobrennstoffgas mischt, und auf der Grundlage des berechneten Gasmischungsverhältnisses eine für die Brennstoffzelle (14) erforderliche Brennstoffnutzungsrate berechnet.

2. Brennstoffzellensystem (1) nach Anspruch 1, ferner umfassend einen Leistungssteuerabschnitt (18), der auf der Grundlage der Brennstoffnutzungsrate einen Wert des von der Brennstoffzelle (14) ausgegebenen Stroms und einen Wert der von der Brennstoffzelle (14) ausgegebenen Spannung steuert.

3. Brennstoffzellensystem (1) nach Anspruch 1, ferner umfassend einen Leistungssteuerabschnitt (18), der einen Wert des von der Brennstoffzelle (14) abgegebenen Stroms und einen Wert der von der Brennstoffzelle (14) abgegebenen Spannung steuert, wobei
der Brennstoffzellen-Steuerabschnitt (17) den Leistungssteuerabschnitt (18) so steuert, dass der Wert des Stroms und der Wert der von der Brennstoffzelle (14) ausgegebenen Spannung die Ausgangsleistung der Brennstoffzelle (14) nahe an eine Zielleistung bringen.

4. Brennstoffzellensystem (1) nach Anspruch 1, ferner umfassend einen Leistungssteuerabschnitt (18), der einen Wert des von der Brennstoffzelle (14) abgegebenen Stroms und einen Wert der von der Brennstoffzelle (14) abgegebenen Spannung steuert, wobei
der Brennstoffzellen-Steuerabschnitt (17) den Leistungssteuerabschnitt (18) so steuert, dass der Wert des Stroms und der Wert der Spannung, die von der Brennstoffzelle (14) ausgegeben werden, die Ausgangsleistung der Brennstoffzelle (14) nahe an die Zielleistung bringen.

5. Brennstoffzellensystem (1) nach Anspruch 1, wobei
der Brennstoffzellen-Steuerabschnitt (17) dazu konfiguriert ist, dem Regler (12) eine Anweisung über eine Einstellgeschwindigkeit zu geben, mit der der Regler (12) das Gasmischungsverhältnis einstellt, und
der Brennstoffzellen-Steuerabschnitt (17) dem Regler (12) eine Anweisung über eine solche Verstellgeschwindigkeit gibt, dass ein an der Brennstoffzelle (14) verursachter Schaden kleiner als ein Schwellenwert wird.

6. Brennstoffzellensystem (1) nach Anspruch 1, wobei der Separator (15) in einem Speicher (2) ein sonstiges Brennstoffgas speichert, das nach der Abtrennung des Rückführgases vom Emissionsgas übrig bleibt.

7. Brennstoffzellensystem (1) nach Anspruch 1, wobei
das Biobrennstoffgas mindestens entweder Methan oder Ethanol enthält,
das Rückführgas ein Kohlendioxidgas ist, und
die Brennstoffzelle (14) als zumindest einen Teil des Versorgungsgases ein von einem Gasversorgungsunternehmen geliefertes Gas erhält.

8. Brennstoffzellensystem (1) nach Anspruch 1, ferner mit einer Schnittstelle, die mindestens eines der folgenden Merkmale präsentiert:
eine von der Brennstoffzelle (14) erzeugte Energiemenge;
einen Stromerzeugungswirkungsgrad der Brennstoffzelle (14); und
Mengen des Versorgungsgases, des Biobrennstoffgases und des Rückführgases, die von der Brennstoffzelle (14) verbraucht werden.

9. Brennstoffzellensystem (1) nach Anspruch 1, ferner mit einer Schnittstelle, die mindestens eines der folgenden Merkmale präsentiert:
einen Einkaufspreis für ein Brennstoffgas, das die Brennstoffzelle (14) zur Stromerzeugung verwendet;
einen prognostizierten Wert des Kaufpreises, der in Abhängigkeit von der Ausgangsleistung der Brennstoffzelle (14) variiert; und
eine Emissionsmenge eines Kohlendioxidgases, die je nach Stromerzeugung der Brennstoffzelle (14) variiert.

10. Brennstoffzellensystem (1) nach Anspruch 1, wobei
das Mischgas ein Gas ist, in dem zusätzlich zu einem Methangas und einem Wasserstoffgas Ethanol-Wasser in einem Anteil von 3 bis 40 Gewichtsprozent des Mischgases gemischt ist, und
das Rückführgas ein Gas ist, bei dem das Verhältnis zwischen einem Gasgemisch aus Kohlendioxid und Wasserdampf und einem Gasgemisch aus Kohlenmonoxid und Wasserstoff in einem Bereich von 9:1 bis 0:10 variiert.

11. Brennstoffzellensystem (1) nach Anspruch 10, wobei
das Mischgas und das Rückführgas ein solches Mischungsverhältnis aufweisen, dass gleichzeitig gilt, dass:
ein Verhältnis y/x, das ein Verhältnis eines molaren Durchflusses y des Wasserstoffgases zu einem molaren Durchfluss x des Ethanol-Wassers ist, gleich oder größer als 3 ist; und
ein Verhältnis b/a, das ein Verhältnis des molaren Durchsatzes b des Wasserdampfs zu einem molaren Durchsatz a des Methangases ist, gleich oder größer als 1 ist, und
entweder y/x ≤ 8 oder b/a ≤ 6,5 gilt.

12. Brennstoffzellensystem (1) nach Anspruch 1, wobei
der Brennstoffnutzungsgrad bei 0,0 bis 0,9 liegt,
die Dichte des durch die Brennstoffzelle (14) fließenden Stroms 0,0 A/cm² bis 0,55 A/cm² beträgt, und
Die von einer Brennstoffzelle (14) abgegebene Spannung 1,1 V bis 0,8 V beträgt.

## Revendications

1. Système (1) de piles à combustible comprenant :
une section (11) de mesure de composition de combustible qui mesure une première composition de gaz d'un gaz mixte dans lequel un gaz d'alimentation alimenté depuis un fournisseur de gaz et un gaz biocombustible sont mélangés ;
**caractérisé par** :
une section (16) de mesure de gaz recyclé qui mesure une deuxième composition de gaz d'un gaz recyclé délivré en sortie par un séparateur (15) qui sépare le gaz recyclé d'un gaz d'émission émis par une pile (14) à combustible qui génère une puissance en utilisant le gaz mixte ; et
une section (17) de commande de pile à combustible qui calcule, sur une base de la première composition de gaz et de la deuxième composition de gaz, un rapport de mélange de gaz auquel un régulateur (12) mélange le gaz d'alimentation et le gaz biocombustible, et calcule, sur une base du rapport de mélange de gaz calculé, un taux d'utilisation de combustible requis pour la pile (14) à combustible.

2. Système (1) de piles à combustible selon la revendication 1, comprenant en outre une section (18) de commande de puissance qui commande, sur une base du taux d'utilisation de combustible, une valeur de courant délivrée en sortie par la pile (14) à combustible et une valeur de tension délivrée en sortie par la pile (14) à combustible.

3. Système (1) de piles à combustible selon la revendication 1, comprenant en outre une section (18) de commande de puissance qui commande une valeur de courant délivrée en sortie par la pile (14) à combustible et une valeur de tension délivrée en sortie par la pile (14) à combustible, dans lequel
la section (17) de commande de pile à combustible commande la section (18) de commande de puissance de telle sorte que la valeur de courant et la valeur de tension délivrées en sortie de la pile (14) à combustible amènent une puissance de sortie de la pile (14) à combustible proche d'une puissance cible.

4. Système (1) de piles à combustible selon la revendication 1, comprenant en outre une section (18) de commande de puissance qui commande une valeur de courant délivrée en sortie par la pile (14) à combustible et une valeur de tension délivrée en sortie par la pile (14) à combustible, dans lequel
la section (17) de commande de pile à combustible commande la section (18) de commande de puissance de telle sorte que la valeur de courant et la valeur de tension délivrées en sortie de la pile (14) à combustible amènent une puissance de sortie de la pile (14) à combustible proche de la puissance cible.

5. Système (1) de piles à combustible selon la revendication 1, dans lequel
la section (17) de commande de pile à combustible est configurée pour donner au régulateur (12) une instruction relative à une vitesse d'ajustement à laquelle le régulateur (12) ajuste le rapport de mélange de gaz, et
la section (17) de commande de pile à combustible donne au régulateur (12) une instruction relative à une vitesse d'ajustement telle qu'un dommage causé à la pile (14) à combustible devient plus petit qu'un seuil.

6. Système (1) de piles à combustible selon la revendication 1, dans lequel le séparateur (15) stocke, dans une installation (2) de stockage, un gaz combustible divers qui est laissé après que le gaz recyclé a été séparé du gaz d'émission.

7. Système (1) de piles à combustible selon la revendication 1, dans lequel
le gaz biocombustible inclut au moins soit du méthane, soit de l'éthanol,
le gaz recyclé est du gaz dioxyde de carbone, et
la pile (14) à combustible reçoit, comme au moins une partie du gaz d'alimentation, un gaz alimenté depuis une compagnie de fourniture de gaz.

8. Système (1) de piles à combustible selon la revendication 1, comprenant en outre une interface qui présente au moins une quelconque parmi :
une quantité de puissance générée par la pile (14) à combustible ;
une efficacité de génération de puissance de la pile (14) à combustible ; et
des quantités du gaz d'alimentation, du gaz biocombustible, et du gaz recyclé qui sont consommées par la pile (14) à combustible.

9. Système (1) de piles à combustible selon la revendication 1, comprenant en outre une interface qui présente au moins un(e) quelconque parmi :
un prix d'achat d'un gaz combustible que la pile (14) à combustible utilise pour une génération de puissance ;
une valeur prédictive du prix d'achat qui varie en fonction d'une puissance délivrée en sortie de la pile (14) à combustible ; et
une quantité d'émission de gaz dioxyde de carbone qui varie en fonction d'une génération de puissance de la pile (14) à combustible.

10. Système (1) de piles à combustible selon la revendication 1, dans lequel
le gaz mixte est un gaz dans lequel de l'éthanol-eau occupant 3 à 40 pour cent en poids du gaz mixte est mélangé, en plus d'un gaz méthane et d'un gaz hydrogène, et
le gaz recyclé est un gaz dans lequel un rapport entre un gaz mixte d'un gaz dioxyde de carbone et de vapeur d'eau et un gaz mixte d'un gaz monoxyde de carbone et d'un gaz hydrogène varie à l'intérieur d'une plage de 9:1 à 0:10.

11. Système (1) de piles à combustible selon la revendication 10, dans lequel
le gaz mixte et le gaz recyclé ont des rapports de mélange de gaz tels que :
un rapport y/x qui est un rapport d'un débit molaire y du gaz hydrogène sur un débit molaire x de l'éthanol-eau est égal ou supérieur à 3 ; et
un rapport b/a qui est un rapport d'un débit molaire b de la vapeur d'eau sur un débit molaire a du gaz méthane est égal ou supérieur à 1,
sont vrais simultanément, et
soit y/x≤8, soit b/a≤6,5 est vraie.

12. Système (1) de piles à combustible selon la revendication 1, dans lequel
le taux d'utilisation de combustible est 0,0 à 0,9,
une densité de courant traversant la pile (14) à combustible est 0,0 A/cm² à 0,55 A/cm², et
une tension délivrée en sortie par une pile (14) à combustible est 1,1 V à 0,8 V.
